(19) Europäisches Patentamt
European Patent Office
Office européen des brevets

(11) EP 0 622 624 B1

# (12) EUROPEAN PATENT SPECIFICATION

(45) Date of publication and mention
of the grant of the patent:
**01.12.1999 Bulletin 1999/48**

(51) Int Cl.$^6$: **G01N 21/21**, G01B 11/06

(21) Application number: **94302911.6**

(22) Date of filing: **25.04.1994**

(54) **A method for observing film thickness and/or refractive index**

Verfahren zur Kontrolle der Schichtdicke und/oder des Brechungsindexes

Procédé de contrôle de l'épaisseur d'une couche et/ou de l'indice de réfraction

(84) Designated Contracting States:
**DE FR GB IT**

(30) Priority: **23.04.1993 JP 9779493**
**23.06.1993 JP 15224793**

(43) Date of publication of application:
**02.11.1994 Bulletin 1994/44**

(73) Proprietor: **RESEARCH DEVELOPMENT CORPORATION OF JAPAN**
**Kawaguchi-shi, Saitama-ken 332 (JP)**

(72) Inventors:
• **Nagayama, Kuniaki**
**Suginami-ku, Tokyo (JP)**
• **Adachi, Eiki**
**Tsukuba-shi, Ibaraki 300-26 (JP)**

(74) Representative: **Davies, Christopher Robert**
**Frank B. Dehn & Co.,**
**European Patent Attorneys,**
**179 Queen Victoria Street**
**London EC4V 4EL (GB)**

(56) References cited:
EP-A- 0 019 088          EP-A- 0 062 083
EP-A- 0 144 115          US-A- 4 381 151

• PATENT ABSTRACTS OF JAPAN vol. 017, no. 105 (P-1495) 3 March 1993 & JP-A-04 294 227 (SHIMADZU CORP) 19 October 1992
• PATENT ABSTRACTS OF JAPAN vol. 017, no. 412 (P-1583) 30 July 1993 & JP-A-05 079 978 (OLYMPUS OPTICAL CO LTD) 30 March 1993

## Description

The present invention relates to a method for observing film thickness and/or refractive index by colour difference. More particularly, the present invention relates to a method for observing film thickness and/or refractive index by colour difference which is useful in the development and evaluation of new materials, and in the observation of the refractive index of a solid or liquid surface in various industrial areas including electronics, the refractive index of a thin film on the surface of a solid or a liquid, and changes in film thickness as well as two dimensional distributions of film thickness.

The study of the condition of a surface is very important in the development and evaluation of new materials, and in the electronics industry. In the production of silicon oxide film on a silicon wafer board, for example, two dimensional film thickness distribution for the silicon oxide film must be confirmed by surface analysis to a precision in the order of a nanometer.

It is thus necessary to observe film thickness, and further, refractive index, of a solid or a liquid as a two dimensional distribution or a dynamic change.

Conventional surface analysis methods, most of which derive from a scanning microscope, include Auger, ESCA, and EPMA, which are useful for local detection or identification of materials, and material analysis.

Secondary ion mass spectrography (SIMS), which is one of the conventional methods, is used to measure material distribution in the depth direction.

However, only the optical methods provide a way of evaluating film thickness and optical properties to a high degree of precision, whatever the materials may be.

The optical methods include the technique of measuring the intensity of transmitted and fluorescent light, but the most reliable way of measuring film thickness is to use an ellipsometer.

Several types of ellipsometer have been developed in recent years to allow for the dynamic measurement of two-dimensional distributions of film thickness and/or refractive index of a thin film on the surface of a material. These ellipsometers are used very often in various methods today. The ellipsometric method may be classified into two types, as follows:

(1) A method to measure two-dimensional distribution by measuring the film thickness and refractive index of a sample using a light beam which is squeezed into a spot of the order of 10 μm in diameter, while moving the sample over a plane (M. Erman and J.B. Theeten, J. Appl. Phys., 60, 859 [1986]); and
(2) A method to record multiple images of the intensity of reflected light beams on a detector using a CCD camera to calculate two-dimensional distributions of film thickness and refractive index of a thin film placed on a substrate (D. Beaglehole, Rev. Sci. Instrum., 59, 2557 [1988]).

Method (1) inevitably involves mechanical vibration because the sample must be moved in the measurement. In addition, the method is not applied to the measurement of liquid surfaces. Further, it takes a long time to scan a sample because the motion of the sample is mechanical.

Method (2) requires the acquisition of multiple digitized images of the intensity of reflected light beams. This involves a long time for completing a run. Further, dozens of images are required to derive a practical level of precision in the measurement of refractive index, and this in turn necessitates the use of a huge memory capacity or an external memory. Similar complex measuring steps must be followed, and thus similar time usage is necessary, for deriving the two-dimensional distribution for just a single refractive index.

Further ellipsometer systems are shown in, for example, EP-A-0144115, EP-A-0019088, and JP-A-04294227.

The present invention was developed in consideration of the above circumstances and aims to solve the problems in the conventional methods by providing a novel method for observing film thickness and/or refractive index; for confirming two-dimensional distribution of refractive index and film thickness and their dynamic change with ease and visually; for observing surface phenomena on a real time basis; and for measuring a liquid surface.

To solve the above problems, the present invention provides a method for observing film thickness and/or refractive index, wherein light from a white light source is irradiated onto the surface of a solid or liquid, and the film thickness or refractive index is determined on the basis of the partial extinction of the reflected light, the colour of the reflected light being used as an indication of said film thickness and/or refractive index.

The present invention further provides a method for observing film thickness and/or refractive index at enhanced sensitivity with an increased colour difference, wherein the reflected light is incident on the surface of the same solid or liquid again, repeating this re-incidence more than once.

Embodiments of the present invention will now be described, by way of example only, with reference to the accompanying drawings, in which:

Fig. 1 is a structural view of a system for partial extinction of reflected light beams according to a first embodiment of the present invention;

Fig. 2 is a structural view of a system for partial extinction of reflected re-incident light beams according to a second embodiment of the present invention;

Fig. 3 is a diagram illustrating the relation between the spectral intensity of reflected light beams partially extinguished and the spectral intensity of reflected light beams from an area with a different film thickness and refractive index; and

Fig. 4 is a photograph from a working example of the present invention.

The basic feature of the present invention consists of the partial extinction and the colouring of reflected light beams as described above. This feature permits observation of the difference in film thickness and/or refractive index by colour difference.

The above feature permits:

(1) the observation of film thickness and/or refractive index distribution by the difference in colour;
(2) the real-time observation of surface phenomena; and
(3) the possibility of the observation of a liquid surface because the sample need not be moved during measurement.

Further, all of these observations can be performed to a high degree of sensitivity.

The working of the present invention is described first with respect to the extinction method (the principle of the extinction type ellipsometer), followed by a description of partial extinction.

Extinction Method

The extinction method is described below. The condition of a polarized light beam is defined by the following formula:

$$\rho = \tan \Psi \cdot e^{i\Delta} = \frac{E_p}{E_s} \tag{1}$$

where $E_p$ and $E_s$ are p and s components of the electric field vector of a light beam, respectively. Next, we consider the surface of a substrate covered with a film. For monochromatic light incident at an oblique angle, polarization of the reflected light beams is expressed by:

$$\rho = E_p/E_s = R_p/R_s \cdot E_p^o/E_s^o \tag{2}$$

By using the following relations:

$$\frac{R_p}{R_s} = \tan \Psi_s \cdot e^{i\Delta s}$$

$$E_p^o/E_s^o = \tan \Psi_0 \cdot e^{i\Delta 0} \tag{3}$$

we obtain:

$$\rho = \tan \Psi_s \cdot \tan \Psi_o \cdot e^{i(\Delta s + \Delta o)} \tag{4}$$

where $R_p$ and $R_s$ are complex reflectivities of the relevant surface. Film thickness, refractive index of the film, refractive index of the substrate, and the incident angle of the light beams are dependent on wavelength. By assuming that the refractive index of the substrate, the incident angle of the light beams, and the wavelength are known. $E_p$ and $E_s$ are p and s components, respectively of the electric field vector of the incident light beam. Assuming these are known as well, then we can treat the light as being linearly polarized when the following equation is satisfied:

$$\Delta_s + \Delta_0 = m\,\pi \qquad \text{(m is an integral number)} \tag{5}$$

Equation (5) indicates that the reflected light beams can be changed into linearly polarised light beams at any time simply by adjusting $\Delta_0$. Linearly polarized light beams can be extinguished by a polariser. Based on the direction of the electric field vector in this instance, $\Psi$ to satisfy $\tan\Psi = \tan\Psi_s \cdot \tan\Psi_0$ can be known. Since $\Delta_0$ and $\Psi_0$ are known, $\Delta_s$ and $\Psi_s$ can be known readily. Since film thickness and refractive index of the film are the only two unknowns, these can be known from $\Delta_s$ and $\Psi_s$. This is the principle of the extinction method in the ellipsometer.

Partial Extinction

Partial extinction is described below.

Assume the light source is white light. White light contains all light wavelengths at the same intensity. In this instance, generally, $\Delta_s$ and $\Psi_s$ are a function of wavelength. When equation (5) is satisfied for a given wavelength in a given incident light with respect to said wavelength, incident angle, film thickness, refractive index for said wavelength, and refractive index of the substrate for said wavelength, then, generally, equation (5) is not satisfied for any other wavelength, and the reflected light beams are linearly polarized only at said single wavelength. Accordingly, only one wavelength can be extinguished when using a polariser. This is called partial extinction. The partially extinct light beams are coloured in the complementary colour to the extinct colour.

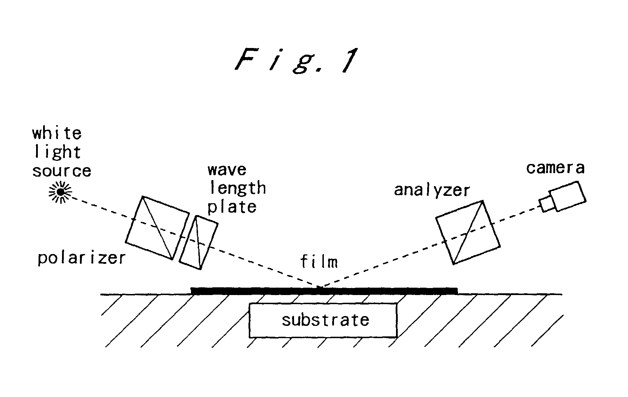

Figure 1 shows an example of a system for partial extinction. The substrate surface to be observed is covered with a thin film of a certain refractive index distribution. A white light source is generally used for an ordinary extinction type ellipsometer. Reflected light beams pass through a detector (that is, polarizer). By properly adjusting the angle of the detector and also the angle of the polarizer on the incident side, partial extinction takes place on the surface of the substrate at a certain wavelength corresponding to the given thin film thickness and refractive index. The first axis (optical fast axis) of the wave plate is set in the 45 or 135 degree direction.

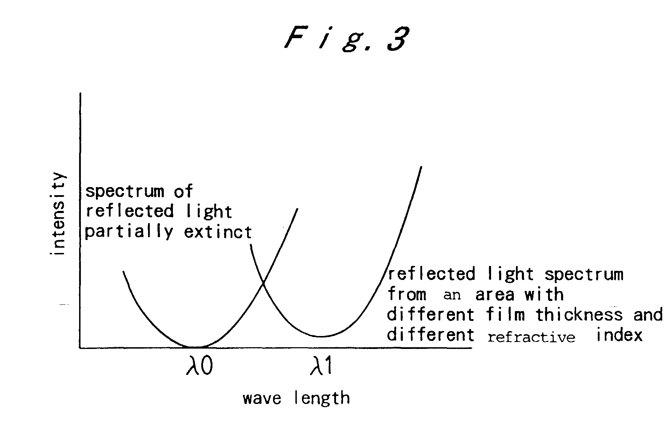

The reflected light beams in this instance are tinted in a certain colour corresponding to a specific film thickness and refractive index because the light beams are partially extinct. An area whose refractive index is the same as the above is a place where similar partial extinction takes place, and is tinted in the came colour. Spectral intensity of the reflected light beams in this instance reaches the lowest level at the wavelength ($\lambda_0$) where partial extinction took place, as shown in Figure 3 for example. At other locations having different refractive indices, the light beams which are reflected from there are either not linearly polarized or are linearly polarised at a different wavelength, and thus are either not partially extinct or are partially extinct at these different wavelengths. The spectral intensity reaches the lowest level in these cases at different wavelengths (for example, $\lambda_1$). When the smallest wavelength is different, the colour is also different, with the result that one will see different colours depending on location. It is possible to shoot the reflected light beams with a camera.

Enhanced Sensitivity

The $\Delta_s$ in equation (5) doubles when the light reflected from the surface of the sample in the above method is reflected from a mirror and re-incident on the same surface. This means that the light beams are reflected from the same surface twice and are polarized two times larger than those reflected only once. The difference in polarization of other reflected light beams from other locations on the same sample having a different film thickness and/or refractive index also doubles. As a result, the colour difference increases. This suggests that a very small difference in film thickness and/or refractive index may possibly be identified by a colour difference.

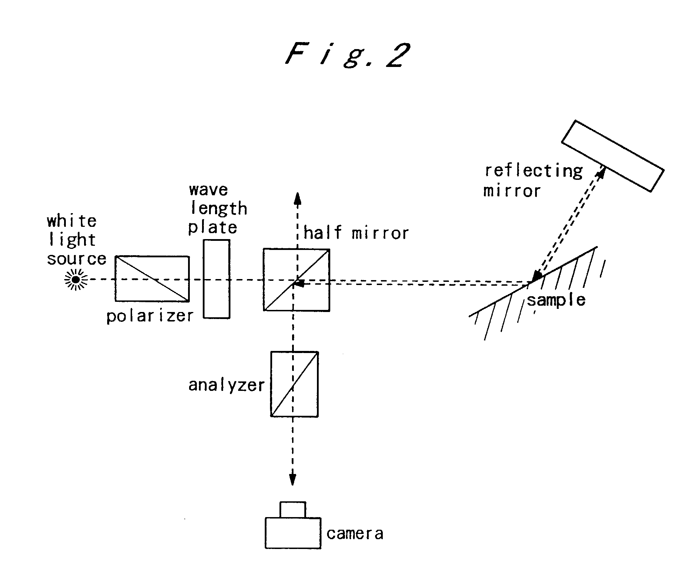

When the reflected light beams are re-incident on the same surface more than twice, then more sensitive observation is possible. Of course, attenuation of the reflected light beams must be considered. Figure 2 shows an example of a system by which the reflected light beams can be re-incidence on the same surface.

It goes without saying that various embodiments are possible for the present invention which is based on the above working principle. For example, in the present invention, the detecting device may be a spectroscope, in which case quantification is possible. A camera, colour CCD camera, spectroscope and other devices may also be used. When specific correspondence between colour and film thickness is predetermined for a specific sample, then one can determine film thickness by observing colour with a camera or a colour CCD camera. In this case, of course, identification is impossible unless the colour difference due to different film thickness has at least a certain size. When this condition is satisfied, film thickness can be accurately determined by the colour observed under the spectroscope.

Working examples are shown below to further describe the present invention in detail.

Working Example 1

The attached Figures 1 and 2 show examples of systems for the present invention. In the present invention, as shown in Figure 1, light beams from a white light source are specifically polarized by a polarizer and a quarter wave plate and are incident on the surface of a sample. The condition of polarization varies and the light beams are reflected from the sample surface, and pass through a detector, finally reaching a camera. The system shown in figure 2 allows observation at an enhanced sensitivity. Light beams, which are incident on and reflected from the surface of a sample, are further reflected from a reflector, and incident on the surface of the same sample again. The condition of polarization also varies here. The light beams are reflected from a half mirror at 90 degrees, and pass through a detector, finally reaching a camera.

It is important, in this instance, to keep in mind that the reflectivity of the half mirror depends on polarization. The dependency should be as small as possible. The reflectivity of the half mirror to be used should not depend on wavelength excessively.

Working Example 2

The difference of film thickness was actually observed on the surface of a silicon wafer substrate using the system shown in Figure 2 which is constructed in Working Example 1.

The sample was a silicon wafer provided with an oxide film which was about 2 nm thick. A resist film was applied to the surface of the sample. The sample was immersed in a 10% HF solution for about 30 seconds, and then washed in pure water, and the resist film was removed with acetone, ready for observation. The area protected by the resist film was covered with the oxide film which retained its original thickness. The resultant surface had a profile in the depth direction.

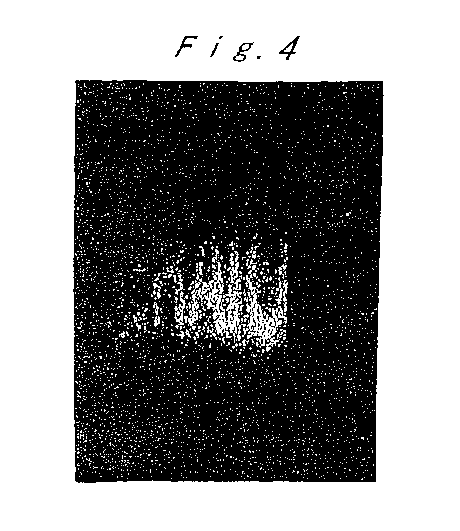

A halogen lamp was used as the light source, and prisms were used as the polarizer and detector. The angle of the polarizer and detector was so adjusted as to extinguish light of 550 nm wavelength using the system shown in figure 2. The result was shot with a camera. Figure 4 shows an example. One can read the word "ERATO".

The area of residual oxide film was white and the surrounding area was blue. The A of the oxide film was 168 degrees and Ψ was 11.8 degrees. Those for the surrounding area were 172 and 11.8 degrees, respectively. These differences are equivalent to approximately 1 nm as the difference of film thickness.

As described above in detail, the present invention makes it possible to discern film thickness and refractive index distribution by colour difference and observe surface phenomena on a real-time basis. It further enables more sensitive observation. Liquid surfaces can also be observed because it is not necessary to move samples in the observation.

**Claims**

1. A method of observing film thickness and/or refractive index, wherein light from a white light source is irradiated onto the surface of a solid or liquid, and the film thickness or refractive index is determined on the basis of the partial extinction of the reflected light, the colour of the reflected light being used as an indication of said film thickness and/or refractive index.

2. The method of claim 1, wherein the light is reflected from the surface more than once.

3. The method of claim 1 or 2, wherein the film thickness and/or refractive index distribution across the surface is determined on the basis of differences in the colour of the light reflected from the different thickness and/or different refractive index regions of the surface.

**Patentansprüche**

1. Verfahren zur Beobachtung einer Filmdicke und/oder eines Brechungsindex, bei welchem die Fläche eines Festkörpers oder einer Flüssigkeit mit Licht von einer Weißlichtquelle bestrahlt wird, und die Filmdicke oder der Brechungsindex auf der Grundlage der partiellen Extinktion des reflektierten Lichtes bestimmt wird, wobei die Farbe des reflektierten Lichtes als ein Indikator der Filmdicke und/oder des Brechungsindex verwendet wird.

2. Verfahren nach Anspruch 1, bei welchem das Licht an der Oberfläche mehr als einmal reflektiert wird.

**3.** Verfahren nach einem der Ansprüche 1 oder 2, bei welchem die Verteilung der Filmdicke und/oder des Brechungsindex über die Oberfläche auf der Grundlage von Unterschieden in der Farbe des Lichtes, welches an unterschiedlichen Dickebereichen und/oder unterschiedlichen Brechungsindexbereichen der Oberfläche reflektiert wird, bestimmt wird.

## Revendications

**1.** Procédé d'observation de l'épaisseur et/ou de l'indice de réfraction d'un film, dans lequel la lumière provenant d'une source de lumière blanche est irradiée sur la surface d'un solide ou d'un liquide, et dans lequel l'épaisseur ou l'indice de réfraction du film est déterminé(e) sur la base de l'extinction partielle de la lumière réfléchie, la couleur de la lumière réfléchie étant utilisée comme indication de ladite épaisseur et/ou dudit indice de réfraction du film.

**2.** Procédé selon la revendication 1, dans lequel la lumière est réfléchie plus d'une fois sur la surface.

**3.** Procédé selon la revendication 1 ou 2, dans lequel l'épaisseur et/ou la distribution de l'indice de réfraction du film en travers de la surface sont déterminés sur la base des différences de couleur de la lumière réfléchie par des régions d'épaisseurs différentes et/ou d'indices de réfraction différents de la surface.

# F i g. 1

# Fig. 2

# F i g. 3

intensity

spectrum of
reflected light
partially extinct

reflected light spectrum
from an area with
different film thickness and
different refractive index

$\lambda 0$        $\lambda 1$

wave length

Fig. 4